**Europäisches Patentamt**

**European Patent Office**

**Office européen des brevets**

(19)

(11) Veröffentlichungsnummer: **0 213 220**
**B1**

(12) **EUROPÄISCHE PATENTSCHRIFT**

(45) Veröffentlichungstag der Patentschrift:
**31.08.88**

(51) Int. Cl.⁴: **C 12 G 3/08**

(21) Anmeldenummer: **85110731.8**

(22) Anmeldetag: **27.08.85**

(54) **Verfahren zur Herstellung von alkoholfreien Getränken.**

(43) Veröffentlichungstag der Anmeldung:
**11.03.87 Patentblatt 87/11**

(45) Bekanntmachung des Hinweises auf die Patenterteilung:
**31.08.88 Patentblatt 88/35**

(84) Benannte Vertragsstaaten:
**AT BE CH DE FR GB IT LI LU NL SE**

(56) Entgegenhaltungen:
**DE-A-2 000 292**
**DE-C-677 581**
**GB-A-2 112 619**

**L. NARZISS: "Abriss der Bierbrauerei", 4. Auflage,
1980, Seiten 187-188,336-337, Ferdinand Enke Verlag,
Stuttgart, DE.
JOURNAL OF THE INSTITUTE OF BREWING, Band
82, Nr. 6, 1976, Seite 361; J.-M. NAVARRO et al.:
"Improvement in a continuous process for the
preparation of fermented beverages", &
INDUSTRIES ALIMENTAIRES ET AGRICOLES 1976,
93, 695-703**

(73) Patentinhaber: **Henninger Bräu AG, Hainer Weg 37-
53, D-6000 Frankfurt/Main 70 (DE)**

(72) Erfinder: **Sommer, Gert, Dr., Letzter Hasenpfad
129, D-6000 Frankfurt/Main 70 (DE)**

(74) Vertreter: **Linser, Heinz, Patentanwälte Heinz
Linser Dipl. Ing. Eckhardt Eyer Robert- Bosch-
Strasse 12a Postfach 10 22 10, D-6072 Dreieich
(DE)**

**Beschreibung**

Die Erfindung betrifft ein Verfahren zur Herstellung eines alkoholfreien Getränkes unter Verwendung von Hefe, gehopfter Malzwürze oder Most und unter Einsatz eines Reaktors.

Aus vielen Gründen ist man seit langem bestrebt nicht nur alkoholarmes sondern auch alkoholfreies Bier zu entwickeln, welches die gleichen geschmacklichen Komponenten aufweist, wie ein Bier mit einem entsprechenden Alkoholgehalt.

Verfahren zur Herstellung von alkoholverarmten Bieren sind seit langem bekannt und gehen auf das Jahr 1895 zurück. So geht aus der deutschen Patentschrift 88 340 ein Verfahren zur Herstellung alkoholfreier Biere hervor, bei dem die Destillation des alkoholischen Bieres am Rückflußkühler und der Ersatz der dabei ausgetriebenen Kohlensäure durch künstliche Imprägnierung erfolgt.

Ein Überblick dieser bekannten Verfahren geht aus der "Brauwelt" 1965, Seite 545 bis 552 hervor. Dieser Literaturstelle ist auch zu entnehmen, daß der Alkoholentzug nach diesen bekannten Verfahren zu einer Geschmackseinbuße führt, so daß sich diese bekannten Verfahren zur Herstellung eines alkoholfreien und alkoholarmen Bieres nicht durchsetzen konnten und keine größere Verbreitung fanden. Dessen ungeachtet hat es auch in den letzten Jahren nicht an Versuchen zur Entwicklung alkoholarmer Biere und Diätbiere gefehlt.

Aus der DE-OS 3 213 056 geht ein Verfahren zur Herstellung von alkoholfreien Getränken mit Hefearoma hervor, bei dem eine wäßrige Lösung mit Nährstoffen, Geschmacksstoffen, Geschmackstoffkonzentraten und weiteren Zusätzen bei so niedrigen Temperaturen, daß praktisch keine alkoholische Gärung eintritt, mit einer aus einem Gärprozeß entnommenen, von der vergorenen Flüssigkeit befreiten Hefe in Berührung gebracht wird, bis die Aromastoffe der Hefe von der Zelle in die wäßrige Flüssigkeit diffundiert sind.

Ein solches Verfahren arbeitet sehr langsam. So beträgt die Kontaktzeit der Ausschlagwürze mit der vom vergorenen Bier völlig befreiten Hefe 24 bis 48 Stunden und benötigt eine relativ hohe Kühlenergie. Ein weiterer Nachteil dieses bekannten Verfahrens besteht auch darin, daß die Überwachungsmöglichkeit des Prozesses sehr gering ist, so daß ein automatischer Ablauf des Verfahrens nicht oder nur mit einem sehr großen Aufwand möglich ist.

Der Erfindung liegt daher die Aufgabe zugrunde, ein Verfahren zur Herstellung eines alkoholfreien Getränkes unter Verwendung von Hefe anzugeben, welches eine kurze Prozeßzeit aufweist, relativ wenig Energie verbraucht und sich leicht überwachen und automatisieren läßt.

Die Lösung dieser Aufgabe besteht darin, daß gemäß der Erfindung eine Ausschlagwürze mit einem Extraktgehalt von 2,5 bis 14 % oder Most auf eine Temperatur zwischen 2° bis 15°C, vorzugsweise zwischen 4° bis 6°C gekühlt, durch Filtration oder Sedimentation vom Kühltrub befreit und belüftet wird und mit einer Kontaktzeit von nicht mehr als 60 Minuten, vorzugsweise 10 Minuten durch den Reaktor mit trägerfixierter Hefe geleitet wird, wobei die Verfahrensparameter

H = verwendete Hefe Trockensubstanz/hl und h,
t = Kontaktzeit der belüfteten Ausschlagwürze oder des Mostes,
T = Prozeßtemperatur im Hefereaktor, der Beziehung:

$$a(f)\,H \times b(f)\,t \times c(f)\,T = K$$

unterworfen sind, und a(f), b(f) und c(f) abhängige Konstanten sind und K eine unabhängige Konstante ist, und daß bei H = 0,4 Kg und T = 5°C die Kontaktzeit t = 10 Minuten beträgt.

Die für die Belüftung geeignete Menge, mit der die Malzwürze oder der Most vor dem Durchgang durch den Hefereaktor beaufschlagt wird, entspricht einer gelösten Sauerstoffmenge von 1 bis 6 mg pro Liter Flüssigkeit.

Für das Verfahren nach der Erfindung sind demnach drei Parameter von ausschlaggebender Bedeutung, nämlich die genannten Verfahrensparameter

H = verwendete Hefe Trockensubstanz/hl und h, (für hl = Hektoliter und h = Stunde)
t = Kontaktzeit der belüfteten Ausschlagwürze oder des Mostes,
T = Prozeßtemperatur im Hefereaktor.

Diese drei Verfahrensparameter können nach der Erfindung in bestimmten Grenzen nach der oben aufgeführten Beziehung variiert werden, wobei diese sich jedoch gegenseitig beeinflussen.

Bei Verwendung von beispielsweise

H = 0,4 Kg und T = 5°C beträgt die Kontaktzeit t = 10 Minuten.

Zur Herstellung eines alkoholfreien Bieres wird nach der Erfindung ein Reaktor mit trägerfixierter Hefe verwendet, welcher einen Träger aus Kieselgur, Perlite, Polyacrylamid, Zellulose, Stärke oder Alginat aufweist.

Der Reaktor kann dabei als Kieselguranschwemmfilter ausgebildet sein, und zwar insbesondere als Spaltfilter, Siebfilter oder als Stützschichtenfilter.

Für die Herstellung eines alkoholfreien Bieres oder eines bierähnlichen Getränkes wird folgendes Beispiel aufgeführt.

Für die Herstellung eines alkoholfreien Getränkes dient eine übliche, für die Bierherstellung benötigte Ausschlagwürze mit einem Extraktgehalt zwischen 2,5 und 14 %.

Extraktgehalt, Zuckerzuzammensetzung, pH-Wert, Farbe und Bitterstoffgehalt richten sich dabei nach dem

0 213 220

gewünschten Biertyp. Als Beispiel für die Herstellung von alkoholfreiem Malztrunk bzw. alkoholfreiem Bier wird folgende Würzezusammenstellung angestrebt:

|                        | Malztrunk | alkoholfreies Bier |
|------------------------|-----------|--------------------|
| Extraktgehalt, g/100 g | 12,0      | 7,2                |
| Farbe, EBC             | 40        | 10                 |
| pH-Wert                | 5,3       | 5,3                |
| Bittereinheit, BE      | 10        | 35                 |
| V (send) %             | 78        | 60                 |

Die Würze wird auf 2 bis 15°, vorzugsweise auf 4 bis 6° gekühlt und durch Filtration oder Sedimentation vom Kühltrub befreit. Die schwachbelüftete Würze mit einem Sauerstoff-Gehalt von 1 bis 6 mg/l, vorzugsweise 3 mg/l, wird anschließend zur geschmacklichen Reifung durch einen Reaktor mit trägerfixierter Hefe gepumpt. Die Fließgeschwindigkeit durch den Reaktor bzw. die Kontaktzeit Würze/Hefe, richtet sich nach der Hefekonzentration im Reaktor, der Reaktionstemperatur und der zu bildenden Menge an Alkohol.

Die Alkoholbildung kann dabei von 0,0 bis 0,4 Gew.-% durch Variation der angeführten Parameter eingestellt werden.

Bei einer definierten Einstellung wird der gelöste Sauerstoff auf unter 0,2 mg Sauerstoff/l durch die Hefe reduziert.

Nach Passieren des Hefereaktors kann das Getränk durch Adsorptionsmittel wie PVPP und/oder Kieselgel stabilisiert, durch Zugabe von Kohlendioxid karbonisiert und in Flaschen abgefüllt und pasteurisiert werden.

Zur Trägerfixierung der Hefe wird frische Bierhefe an einen geeigneten Träger fixiert (z. B. an Kieselgur, Perlite, Polyacrylamid, Zellulose, oder Alginat eingeschlossen), in ein Reaktorbett überführt und der noch vorhandene Restalkoholgehalt der Hefe durch Spülen mit Wasser entfernt. Als Reaktor können z. B. Kieselguranschwemmfilter, insbesondere Spaltfilter, Siebfilter oder auch Stützschichtenfilter verwendet werden.

Zur Herstellung eines vollständig alkoholfreien Bieres müssen bei einem Anschwemmreaktor z. B. folgende Bedingungen pro Hektoliter Duchsatz und Stunde eingehalten werden:

| Hefekonzentration im Reaktor: | 0,4 bis 0,5 kg Hefe Trs. |
|-------------------------------|--------------------------|
| Reaktionstemperatur:          | 5°C                      |
| Kontaktzeit:                  | 10 min.                  |

Der Hefereaktor kann theoretisch mehrere Tage betrieben werden. Die Betriebszeit kann einzig durch Verstopfen der Poren durch ungenügende Vorklärung beeinträchtigt werden.

Aus diesem Grunde ist es vorteilhaft, bei Verwendung von Anschwemmreaktoren eine geringe Menge grober Kieselgur oder Perlite zum laufenden Strom zu dosieren.

## Patentansprüche

1. Verfahren zur Herstellung eines alkoholfreien Getränkes unter Verwendung von Hefe, gehopfter Malzwürze oder Most und unter Einsatz eines Reaktors, dadurch gekennzeichnet, daß eine Ausschlagwürze mit einem Extraktgehalt von 2,5 bis 14 % oder Most auf eine Temperatur zwischen 2° bis 15°C, vorzugsweise zwischen 4° bis 6°C gekühlt, durch Filtration oder Sedimentation vom Kühltrub befreit und belüftet wird und mit einer Kontaktzeit von nicht mehr als 60 Minuten, vorzugsweise 10 Minuten durch den Reaktor mit trägerfixierter Hefe geleitet wird, wobei die Verfahrensparameter

H = verwendete Hefe Trockensubstanz/hl und h (für hl = Hektoliter und h = Stunde)
t = Kontaktzeit der belüfteten Ausschlagwürze oder des Mostes,
T = Prozeßtemperatur im Hefereaktor, der Beziehung:

$$a (f) H \times b(f) t \times c(f) T = K$$

unterworfen sind, wobei a(f), b(f) und c(f) abhängige Konstanten sind und K eine unabhängige Konstante ist, und daß bei H = 0,4 Kg und T = 5° C die Kontaktzeit t = 10 Minuten beträgt.

2. Verfahren nach Anspruch 1, dadurch gekennzeichnet, daß die Malzwürze oder der Most vor dem Durchgang durch den Hefereaktor mit einer gelösten Sauerstoffmenge von 1 bis 6 mg pro Liter Flüssigkeit belüftet wird.

3. Verfahren nach Anspruch 1 oder 2, dadurch gekennzeichnet, daß zur Herstellung eines Malztrunkes eine Würzezusammensetzung verwendet wird, welche einen Extraktgehalt von 12,0 g/100 g, einen pH Wert von 5,3; 10 Bittereinheiten BE; 78 V (send) % und eine Farbe von 40 EBC aufweist.

4. Verfahren nach Anspruch 1, oder einem der voranstehenden Ansprüche, dadurch gekennzeichnet, daß zur Herstellung eines alkoholfreien Bieres eine Würzezusammensetzung verwendet wird, welche einen Extraktgehalt von 7,2 g/100 g; einen pH Wert von 5,3; 35 Bittereinheiten BE, 60 V (send) % und eine Farbe von

3

10 EBC aufweist.

5. Verfahren nach Anspruch 1, oder einem der voranstehenden Ansprüche, <u>dadurch gekennzeichnet</u>, daß zur Herstellung eines alkoholfreien Bieres ein Reaktor mit trägerfixierter Hefe verwendet wird, welcher einen Träger aus Kieselgur, Perlite, Polyacrylamid, Zellulose, Stärke oder Alginat aufweist.

6. Verfahren nach Anspruch 1, oder einem der voranstehenden Ansprüche, <u>dadurch gekennzeichnet</u>, daß zur Herstellung eines alkoholfreien Bieres ein Reaktor verwendet wird, welcher als Kieselguranschwemmfilter ausgebildet ist, insbesondere als Spaltfilter, Siebfilter oder als Stützschichtenfilter.

## Claims

1. A method for preparing a non-alcoholic beverage using yeast, malt wort with hops, or must, and employing a reactor, characterized by that a hop wort having an extract content of 2.5 to 14 % or must is cooled down to a temperature between 2 and 15°C, preferably between 4 and 6°C, that said hop wort or must is set free from the turbid cooling portions by filtration or sedimentation, that it is aerated, and that it is conducted through the reactor with carrier-fixed yeast with a contact time of not more that 60 minutes, preferably 10 minutes, the process parameters

H = used yeast dry substance/hl and h (hl = hectoliter and h = hour),

t = contact time of the aerated hop wort or must,

T = process temperature in the yeast reactor, being subjected to the relation

$$a(f) \, H \times b(f) \, t \times c(f) \, T = K,$$

a(f) , b(f) and c(f) being dependent constants, and R being an independent constant, and that for H = 0.4 kg and T = 5°C, the contact time t = 10 minutes.

2. A method according to claim 1, characterized by that the hop wort or the must is aerated, prior to passing through the yeast reactor, with a dissolved oxygen amount of 1 to 6 mg per liter liquid.

3. A method according to claims 1 or 2, characterized by that for preparing a malt beverage, a wort composition is used having an extract content of 12.0 g/100 g, a pH index of 5.3, 10 bitter units BE, 78 V (send) %, and a colour of 40 EBC.

4. A method according to claim 1 or to one of the preceding claims, characterized by that for preparing a non-alcoholic beer, a wort composition is used having an extract content of 7.2 g/100 g, a pH index of 5.3, 35 bitter units BE, 60 V (send) %, and a colour of 10 EBC.

5. A method according to claim 1 or to one of the preceding claims, characterized by that for preparing a non-alcoholic beer, a reactor with carrier-fixed yeast is used having a carrier consisting of kieselguhr, perlite, polyacrylic amide, cellulose, starch, or alginate.

6. A method according to claim 1 or to one of the preceding claims, characterized by that for preparing a non-alcoholic beer, a reactor is used being designed as kieselguhr alluvial filter, in particular as streamline filter, screen filter or supporting layer filter.

## Revendications

1. Procédé pour la préparation d'une boisson sans alcool à l'emploi de levure, moût de malt houblonné, ou moût et d'un reacteur, caractérisé en ce qu'un moût houblonné avec un pourcentage d'extraction de 2,5 à 14 % ou moût est refroidi à une température entre 2 et 15°C, de préférence entre 4 et 6°C, que le dépôt de bac est enlevé par filtration ou sédimentation, que le moût est aéré et est conduit avec une durée de contact de pas plus que 60 minutes, de préférence 10 minutes, à travers du reacteur avec levure fixée par un porteur, les paramètres du procédé

H = levure employée matière sèche/hl et h (hl = hectolitre et h = heure),

t = durée de contact du moût houblonné aéré ou du moût,

T = température du procédé dans le reacteur de levure, êtant soumis à l'équation:

$$a(f) \, H \times b(f) \, t \times c(f) \, T = K,$$

a(f), b(f) et c(f) étant des constantes dépendantes, et K étant une constante indépendante, et que, pour H = 0,4 kg et T = 5°C, la durée de contact est t = 10 minutes.

2. Procédé selon la revendication 1, caractérisé en ce que le moût houblonné ou le moût est aéré, avant de passer à travers du reacteur de levure, avec une quantité d'oxygène dissolu de 1 à 6 mg par litre liquide.

3. Procédé selon la revendication 1 ou 2, caractérisé en ce que pour la préparation d'une boisson de malt, une composition de moût est employée présentant un pourcentage d'extraction de 12,0 g/100 g, une valeur pH de 5,3, 10 unités d'amertume BE, 78 V (send) % et une couleur de 40 EBC.

4. Procédé selon la revendication 1 ou une des revendications précédentes, caractérisé en ce que pour la préparation d'une bière sans alcool, une composition de moût est employée présentant un pourcentage d'extraction de 7,2 g/100 g, une valeur pH de 5,3, 35 unités d'amertume BE, 78 V (send) % et une couleur de 10 EBC.

5. Procédé selon la revendication 1 ou une des revendications précédentes, caractérisé en ce que pour la préparation d'une bière sans alcool, un reacteur avec levure fixée par un porteur est employé présentant un porteur de kieselguhr, perlite, polyacrylamide, cellulose, amidon ou alginate.

6. Procédé selon la revendication 1 ou une des revendications précédentes, caractérisé en ce que pour la préparation d'une bière sans alcool, un reacteur est employé formé comme un filtre à couches de kieselguhr, en particulier comme un filtre à disques, un filtre-tamis ou un filtre à couches de support.